# EUROPEAN PATENT APPLICATION

(11) **EP 4 394 966 A1**
(43) Date of publication of application: **03.07.2024**
(21) Application number: 23218580.1
(22) Date of filing: 20.12.2023
(51) Int. Cl.: H01M 10/04, H01M 50/538, H01M 50/536, H01M 50/533, H01M 50/529, H01M 50/528, H01M 10/0587, H01M 50/186, H01M 50/107

(54) **SECONDARY BATTERY**

(30) Priority: 02.01.2023 KR 20230000099
(71) Applicant: Samsung SDI Co., Ltd., Yongin-si, Gyeonggi-do 17084 (KR)
(72) Inventor: PARK, Jung Hyun, 17084 Yongin-si (KR); KIM, Jung Hyun, 17084 Yongin-si (KR); SHIN, Joo Youn, 17084 Yongin-si (KR); KIM, Joung Ku, 17084 Yongin-si (KR)
(74) Representative: Marks & Clerk LLP

(57) **Abstract**

A secondary battery includes an electrode assembly which is wound and includes a first electrode plate including a first uncoated portion, a second electrode plate including a second uncoated portion, and a separator between the first electrode plate and the second electrode plate, a case having a cylindrical shape and accommodating the electrode assembly, and a cap assembly sealing the case, and a cutting depth before winding of each of the first uncoated portion and the second uncoated portion is in a range of 100% to 150% as compared with a forming position. When a non-coated portion for forming a substrate tab is cut, a cutting width is changed to increase toward a winding end, thereby minimizing or reducing an overlapping amount between substrates during winding, and damage to the substrate during pre-folding or compaction of the substrate may be prevented or substantially prevented.

## Description

### BACKGROUND

### 1. Field

Aspects of embodiments of the present disclosure relate to a secondary battery.

### 2. Description of the Related Art

In general, a cylindrical secondary battery includes an electrode assembly having a cylindrical shape, a can having a cylindrical shape and accommodating the electrode assembly and an electrolyte, and a cap assembly coupled to an upper opening of the can to seal the can and allow a current generated by the electrode assembly to flow to an external device. The electrode assembly has a form in which a negative electrode plate, a positive electrode plate, and a separator interposed therebetween are wound in a cylindrical shape.

In order to connect an electrode assembly to a current collector plate, before winding, a substrate (uncoated portion) not coated with an active material is compacted before being connected to the current collector plate. In this case, there may be a problem that a substrate of a portion which is first folded is damaged or a plurality of substrates are bent in an irregular shape and bent in various directions. In addition, when an electrode assembly is wound after substrates are cut to form substrate tabs, an overlapping amount between the substrates increases toward a front end, which is a winding center, and, thus, damage to the substrate may become more severe. Therefore, there is a need to solve such a problem.

The above information disclosed in this background section is provided for enhancement of understanding of the background of the disclosure and, therefore, it may contain information that does not constitute the related art.

### SUMMARY

According to an aspect of embodiments of the present disclosure, a secondary battery is provided in which damage to a substrate may be prevented or substantially prevented. According to an aspect of embodiments of the present disclosure, a secondary battery is provided in which damage to a substrate during pre-folding or compaction of the substrate may be prevented or substantially prevented.

According to one or more embodiments of the present disclosure, a secondary battery includes an electrode assembly which is wound and includes a first electrode plate including a first uncoated portion, a second electrode plate including a second uncoated portion, and a separator between the first electrode plate and the second electrode plate, a case having a cylindrical shape and accommodating the electrode assembly, and a cap assembly sealing the case, wherein a cutting depth (L2) before winding of each of the first uncoated portion and the second uncoated portion is in a range of 100% to 150% as compared with a forming position (A).

The cutting depth (L2) may be a cutting length in a direction from an end of each of the first and second uncoated portions toward an active material coating region.

The forming position (A) may be a position at which the first uncoated portion and the second uncoated portion are folded when compacted.

A cutting direction of the first uncoated portion and the second uncoated portion may be perpendicular to the end of each of the first uncoated portion and the second uncoated portion.

A cutting direction of the first uncoated portion and the second uncoated portion may form an oblique line to the end of each of the first uncoated portion and the second uncoated portion.

When the electrode assembly is wound, the end of each of the first uncoated portion and the second uncoated portion may form an acute angle with the cutting direction based on a direction toward an outermost winding side.

When the first uncoated portion and the second uncoated portion are cut, a cutting width may gradually increase toward a winding end.

In the first uncoated portion and the second uncoated portion, when the electrode assembly is wound, a portion of a region adjacent to a winding start portion and a portion of a region adjacent to an outermost winding portion may be cut.

The case may include an upper surface portion having a circular shape and a side portion extending downward from the upper surface portion and having an open lower end portion, and the cap assembly may be coupled to the lower end portion of the side portion and insulated from the side portion.

A rivet terminal electrically connected to the first electrode plate and insulated from the upper surface portion may be coupled to the upper surface portion.

The side portion may be electrically connected to the second electrode plate, the first electrode plate may be a positive electrode, and the second electrode plate may be a negative electrode.

The secondary battery may further include a first electrode current collector plate disposed between the first electrode plate and the rivet terminal, and including a terminal connection portion electrically connected to the rivet terminal and an electrode plate connection portion electrically connected to the first electrode plate.

The electrode plate connection portion may have a disk shape, and the terminal connection portion may be formed on the electrode plate connection portion and separated from the electrode plate connection portion by a slot formed to pass through the electrode plate connection portion.

The first electrode current collector plate may further include a fuse portion connecting the terminal connection portion and the electrode plate connection portion.

The electrode plate connection portion may be welded in a state in which a lower surface thereof is in contact with an upper surface of the first uncoated portion folded when the first uncoated portion is compacted.

A welding direction between the electrode plate connection portion and the first uncoated portion may be a radial direction.

The secondary battery may further include a second electrode current collector plate including a plate surface portion which has a disk shape and is electrically connected to the second electrode plate and at least one extension portion which extends from the plate surface portion in a direction and is electrically connected to the side portion of the case.

The extension portion may be insulated from the cap assembly.

A beading part may be formed at the side portion of the case to be concave toward the electrode assembly, and a gasket made of an insulating material may be inserted between the cap assembly and the side portion of the case.

The extension portion may be electrically connected to the beading part.

A welding direction between the plate surface portion and the second uncoated portion may be a radial direction.

At least some of the above and other features of the invention are set out in the claims.

### BRIEF DESCRIPTION OF DRAWINGS

FIG. 1 is a perspective view illustrating a secondary battery according to an embodiment.
FIG. 2 is a cross-sectional view illustrating an electrode assembly of the secondary battery of FIG. 1.
FIG. 3A is a plan view illustrating a first electrode current collector plate according to an embodiment.
FIG. 3B is a perspective view illustrating a second electrode current collector plate according to an embodiment.
FIG. 4 is a plan view illustrating a state in which an uncoated portion of an electrode plate is cut according to an embodiment of the present disclosure.
FIG. 5 is a plan view illustrating a state after an electrode assembly is wound according to an embodiment of the present disclosure.
FIG. 6 is a plan view illustrating a state in which an uncoated portion of an electrode plate is cut according to another embodiment of the present disclosure.
FIGS. 7A and 7B show a comparison between states after forming of an electrode assembly to which cutting of an uncoated region is applied according to an embodiment of the present disclosure and a general electrode assembly, respectively.

### DETAILED DESCRIPTION

Some embodiments of the present disclosure are provided to describe the present disclosure more completely to those having ordinary skill in the art. However, the following embodiments may be modified into various different forms, and the scope of the present disclosure is not limited to the following embodiments. Rather, the embodiments are provided so that the present disclosure will be thorough and complete and will convey the concept of the present disclosure to those skilled in the art.

In addition, in the accompanying drawings, the thickness and size of components and layers may be exaggerated for convenience of description and clarity. Like reference numerals refer to like elements. As used herein, the term "and/or" includes any and all combinations of one or more of the associated listed items. In addition, in the present specification, it is to be understood that, when a member A is referred to as being "connected to" a member B, the member A may be directly connected to the member B or one or more intervening members C may be present therebetween such that the member A and the member B are indirectly connected to each other.

The terminology used herein is for the purpose of describing particular embodiments and is not intended to limit the present disclosure. As used herein, the singular forms are intended to include the plural forms as well, unless the context clearly indicates otherwise. It is to be further understood that the terms "comprise or include" and/or "comprising or including," when used in this specification, specify the presence of stated shapes, numbers, steps, operations, members, elements, and/or groups thereof but do not preclude the presence or addition of one or more other shapes, numbers, steps, operations, members, elements, and/or groups thereof.

It is to be understood that, although the terms "first," "second," and the like are used herein to describe various members, parts, regions, layers, and/or portions, these members, parts, regions, layers, and/or portions are not limited by these terms. These terms are used to distinguish one member, part, region, layer, or portion from another member, part, region, layer, or portion. Accordingly, a first member, part, region, layer, or portion which will be described below may denote a second member, part, region, layer, or portion without deviating from teachings of the present disclosure.

Spatially relative terms, such as "beneath," "below," "lower," "above," "upper," "upward," and the like, may be used herein for ease of description to describe one element or feature's relationship to another element(s) or feature(s) as illustrated in the drawings. It is to be understood that the spatially relative terms are intended to encompass different orientations of the device in use or operation in addition to the orientation depicted in the drawings. For example, if the device in the drawings is turned over, elements or features described as "below" or "beneath" other elements or features would then be oriented "above" or "over" the other elements or features. Thus, the term "below" can encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, a secondary battery and a method of manufacturing a secondary battery according to embodiments of the present disclosure will be described in further detail with reference to the accompanying drawings.

First, a structure of a secondary battery according to an embodiment will be described.

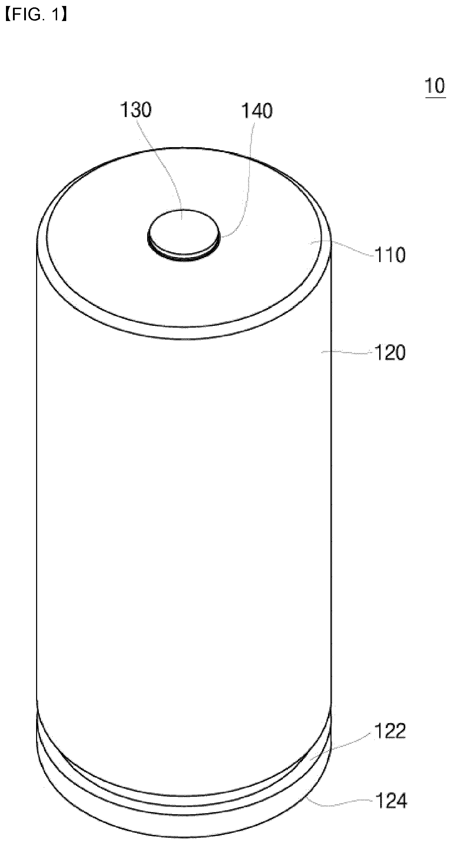

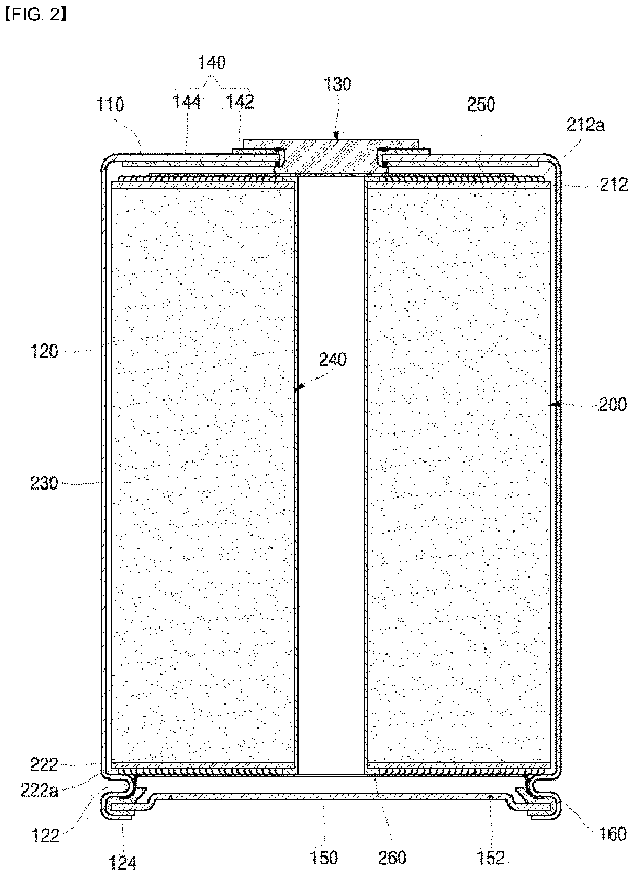

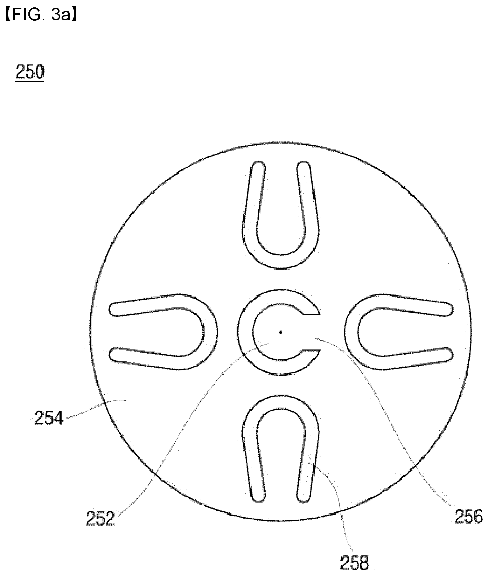

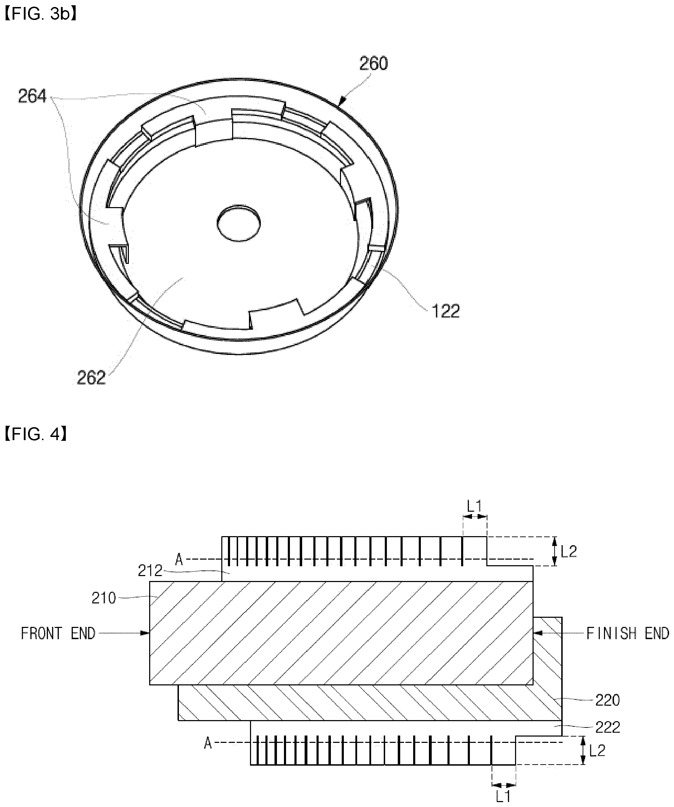

FIG. 1 is a perspective view illustrating a secondary battery according to an embodiment. FIG. 2 is a cross-sectional view illustrating an electrode assembly of the secondary battery of FIG. 1. FIG. 3A is a plan view illustrating a first electrode current collector plate according to an embodiment. FIG. 3B is a plan view illustrating a second electrode current collector plate according to an embodiment.

Referring to FIGS. 1 to 3B, a secondary battery 10 according to an embodiment may include a case 100 having a cylindrical shape and an electrode assembly 200 accommodated in the case 100. A rivet terminal 130 may be provided at an upper end portion of the case 100. The rivet terminal 130 may be insulated from the case 100 by a gasket 140. A cap plate, or cap assembly, 150 may be coupled to a lower portion of the case 100. The cap plate 150 may be insulated from the case 100 by a gasket 160. The electrode assembly 200 may be electrically connected to the rivet terminal 130 and the case 100 by first and second current collector plates 250 and 260.

As shown in FIGS. 1 and 2, the case 100 may include an upper surface portion 110 having a circular shape and a side portion 120 extending downward from the upper surface portion 110. That is, the case 100 may have a hollow cylindrical shape with an open lower portion. A terminal hole is formed to pass through the upper surface portion 110, and the rivet terminal 130 is coupled to the terminal hole. To fix the electrode assembly 200 and seat the cap plate 150, a beading part 122 may be formed adjacent to an end portion of the side portion 120 to be concave inward. After the cap plate 150 is seated, an end portion of the side portion 120 spaced apart from the beading part 122 may be bent inward to form a crimping part 124, thereby fixing the cap plate 150. In an embodiment, the case 100 may be formed of steel, a steel alloy, nickel-plated steel, a nickel-plated steel alloy, aluminium, an aluminium alloy, or an equivalent thereof. However, a material of the case 100 is not limited thereto. In a manufacturing process, after the open lower portion of the case 100 is disposed to face upward, the electrode assembly 200 may be inserted together with an electrolyte. Thereafter, after the cap plate 150 is seated on the beading part 122, the crimping part 124 may be formed to fix the cap plate 150, and the cap plate 150 may be disposed to face downward. However, the secondary battery 10 may be used in a state in which the cap plate 150 faces upward.

The rivet terminal 130 is coupled to the upper surface portion 110 of the case 100 and is electrically connected to a first electrode plate 210 through the first electrode current collector plate 250. In an embodiment, the rivet terminal 130 has a form of a riveted terminal. After the rivet terminal 130 is inserted into the terminal hole from the outside of the case 100, an inner end portion of the rivet terminal 130 may be pressed and deformed through processing such as pressing or spinning to be brought into close contact with an inner side of the upper surface portion 110 of the case 100. In another embodiment, after the rivet terminal 130 is inserted into the terminal hole inside the case 100, an outer end portion of the rivet terminal 130 may be pressed and deformed to be brought into close contact with an outer side of the upper surface portion 110 of the case 100. In this case, the gasket 140 may be inserted between the rivet terminal 130 and the case 100 to insulate the case 100 from the rivet terminal 130.

The gasket 140 may include a first gasket 142 inserted between the rivet terminal 130 and the outer side of the upper surface portion 110 and a second gasket 144 inserted between the rivet terminal 130 and the inner side of the upper surface portion 110.

As shown in FIG. 2, an edge of the cap plate 150 is fixed to the side portion 120 of the case 100 by the beading part 122 and the crimping part 124 and insulated from the side portion 120 by the gasket 160. In an embodiment, a vent 152, which is opened when an internal pressure is greater than or equal to a certain pressure, may be formed in the cap plate 150. The vent 152 may be formed to be thinner than other regions.

As shown in FIG. 2, the first electrode plate 210 to be described below (see FIG. 4), a second electrode plate 220 to be described below (see FIG. 4), and a separator 230 interposed between the first electrode plate 210 and the second electrode plate 220 are wound in a cylindrical shape to form the electrode assembly 200. The first electrode plate 210 and the second electrode plate 220 are electrically connected to the first electrode current collector plate 250 and the second electrode current collector plate 260, respectively. For example, the first electrode plate 210 may serve as a positive electrode, and the second electrode plate 220 may serve as a negative electrode. Alternatively, the reverse is also possible.

When the first electrode plate 210 is a positive electrode plate, the first electrode plate 210 may be formed by applying a first electrode active material, such as a transition metal oxide, on a first electrode current collector provided as a metal foil made of aluminium or an aluminium alloy, for example. A first uncoated portion 212, which is a region on which the first electrode active material is not applied, may be formed on the first electrode plate 210. The uncoated portion may also be referred to as a substrate. In a manufacturing process, the first uncoated portion 212 may be cut to form a plurality of first substrate tabs 212a. The first substrate tabs 212a may be folded at a certain angle by being pre-folded before the electrode assembly 200 is wound (when pre-folding is performed, a substrate can be compacted by minimizing or reducing damage to or wrinkles of the substrate when the substrate is compacted when connected to a current collector plate later). In the figures, the first substrate tab 212a is shown, as an example, as being disposed to face an upward direction of the electrode assembly 200. The first substrate tab 212a may be electrically connected to the positive electrode current collector after the electrode assembly 200 is wound. The positive current collector plate may be electrically connected to the above-described rivet terminal 130.

When the second electrode plate 220 is a negative electrode plate, the second electrode plate 220 may be formed by applying a second electrode active material, such as graphite or carbon, on a second electrode current collector provided as a metal foil made of copper, a copper alloy, nickel, or a nickel alloy, for example. A second uncoated portion 222, which is a region on which the second electrode active material is not applied, may be formed on the second electrode plate 220. The uncoated portion may also be referred to as a substrate. In a manufacturing process, the second uncoated portion 222 may be cut to form a plurality of second substrate tabs 222a. The second substrate tabs 222a may be folded at a certain angle by being pre-folded before the electrode assembly 200 is wound. In the figures, the second substrate tab 222a is shown, as an example, as being disposed to face a downward direction of the electrode assembly 200. The second substrate tab 222a may be electrically connected to the negative electrode current collector after the electrode assembly 200 is wound. The negative current collector plate may be insulated from the rivet terminal 130 and may be electrically connected to the case 100. Accordingly, the upper surface portion 110 of the case 100 has a negative polarity, and the rivet terminal 130 has a positive polarity.

The separator 230 may be disposed between the first electrode plate 210 and the second electrode plate 220 to prevent or substantially prevent a short circuit and enable movement of lithium ions. For example, the separator 230 may include polyethylene, polypropylene, or a composite film of polyethylene and polypropylene. In some examples, the separator 230 may be replaced with an inorganic-based solid electrolyte, such as a sulfide-based, oxide-based, or phosphate compound-based solid electrolyte that does not require a liquid or gel electrolyte.

The electrode assembly 200 may be accommodated in the case 100 together with an electrolyte. In some examples, the electrolyte may include a lithium salt, such as LiPF₆ or LiBF₄ in an organic solvent such as ethylene carbonate (EC), propylene carbonate (PC), diethyl carbonate (DEC), ethyl methyl carbonate (EMC), or dimethyl carbonate (DMC). In addition, the electrolyte may be in a liquid or gel state. In some examples, when an inorganic-based solid electrolyte is used, the electrolyte may be omitted.

As shown in FIGS. 2 and 3A, the first electrode current collector plate 250 may have a generally or approximately disk shape and may include a terminal connection portion 252, an electrode plate connection portion 254, a fuse portion 256, and a buffer slit 258.

The terminal connection portion 252 is a region corresponding to a generally or approximately central portion of a plate surface and is electrically connected to the rivet terminal 130. For example, a slot having an approximately "C" shape may be formed around the terminal connection portion 252. A portion circularly separated by the slot is the terminal connection portion 252, and a portion for connecting the terminal connection portion 252 and the electrode plate connection portion 254 is the fuse portion 256 which functions as a fuse. The fuse portion 256 is melted and disconnected when a short circuit or overcurrent occurs, thereby interrupting an electrical connection with the rivet terminal 130 and blocking a current flowing in the secondary battery 10.

The electrode plate connection portion 254 is an entire region except for the terminal connection portion 252, the fuse portion 256, and the buffer slit 258. The electrode plate connection portion 254 is a portion to which the first substrate tab 212a formed by cutting the first uncoated portion 212 is electrically connected. For example, the electrode plate connection portion 254 and the first substrate tab 212a may be connected through welding. In some embodiments, the electrode plate connection portion 254 and the first substrate tab 212a may be radially welded.

As shown in FIGS. 2 and 3B, the second electrode current collector plate 260 may include a plate surface portion 262 having a generally or approximately disk shape and an extension portion 264 extending from the plate surface portion 262 in a direction.

The plate surface portion 262 is a portion to which the second substrate tab 222a formed by cutting the second uncoated portion 222 is electrically connected. For example, the plate surface portion 262 and the second substrate tab 222a may be connected through welding. In some embodiments, the plate surface portion 262 and the second substrate tab 222a may be radially welded.

The extension portion 264 is a portion which is bent downward and extended from the plate surface portion 262 and disposed between the beading part 122 and the gasket 160. In an embodiment, a plurality of extension portions 264 may be spaced apart from each other along an edge of the plate surface portion 262. For example, the extension portion 264 may be electrically connected to the beading part 122 through welding. In an embodiment, the plate surface portion 262 and the extension portion 264 are integrally formed, the plate surface portion 262 is electrically connected to the second substrate tab 222a, and the beading part 122 and the second electrode plate 220 are electrically connected. Therefore, the case 100 may be a negative electrode.

In the above-described secondary battery 10, an example of a shape in which the cap plate 150 is disposed at a lower portion of the secondary battery 10 has been described; however, the shape is not limited here. A method of manufacturing a secondary battery to be described below can be applied to all secondary batteries in which an electrode assembly is wound in a cylindrical shape.

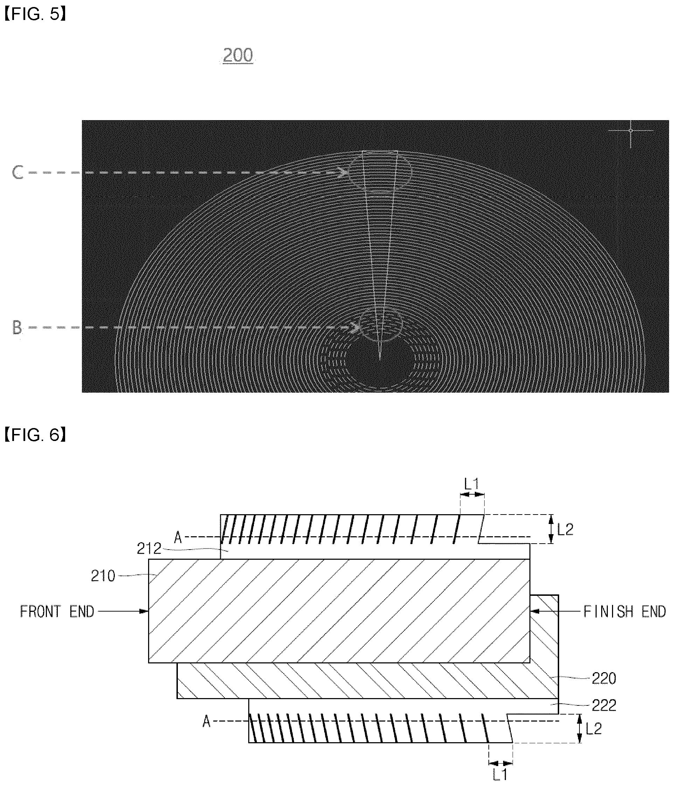

Herein, a method of manufacturing an electrode assembly in a method of manufacturing a secondary battery according to an embodiment of the present disclosure will be described. For convenience, only an electrode plate excluding a separator is shown in FIGS. 4 and 6.

FIG. 4 is a plan view illustrating a state in which an uncoated portion of an electrode plate is cut according to an embodiment of the present disclosure. FIG. 5 is a plan view illustrating a state after an electrode assembly is wound according to an embodiment of the present disclosure.

As shown in FIG. 4, a first uncoated portion 212 and a second uncoated portion 222 not coated with an active material are formed on a first electrode plate 210 and a second electrode plate 220, respectively. During a manufacturing process, prior to a process of winding an electrode assembly 200, the first uncoated portion 212 and the second uncoated portion 222 are cut to form a plurality of first substrate tabs 212a and a plurality of second substrate tabs 222a, respectively. In an embodiment, a cutting method may be a laser notching method. When the first electrode plate 210 and the second electrode plate 220 are wound, an end in a length direction, which is disposed at a winding center, is defined as a "front end," and, when the first electrode plate 210 and the second electrode plate 220 are wound, another end in the length direction, which corresponds to the outermost side, is defined as a "finish end." For example, in certain regions adjacent to the front ends of the first electrode plate 210 and the second electrode plate 220, uncoated regions may not be formed. During a compaction process of compacting a substrate after winding the electrode assembly 200, in order to not cover a core of a central portion, an uncoated region is not formed in a certain region adjacent to the front end. In addition, in certain regions adjacent to the finish ends of the first electrode plate 210 and the second electrode plate 220, uncoated regions may also not be formed. In order to prevent or substantially prevent the uncoated portion from protruding out of the electrode assembly 200 during the compaction process, an uncoated portion is not formed in a certain area adjacent to the finish end. When a substrate tab is formed by cutting the uncoated portion subsequent to the certain region, a cutting width L1 may gradually increase from the front end to the finish end. The cutting width L1 refers to a cutting interval in a length direction of the first electrode plate 210 and the second electrode plate 220. That is, an interval in a direction from the front end toward the finish end of the first electrode plate 210 and the second electrode plate 220 becomes the cutting width L1. In an embodiment, for example, the cutting width L1 may start from a range of 1 mm to 3 mm at the front end and may increase to a range of 3 mm to 6 mm at the finish end.

In addition, a cutting depth L2 may be in a range of 100% to 150% as compared with a forming position A. The cutting depth L2 refers to a length cut in a direction perpendicular to the cutting width L1. The forming position A is a position in consideration of first forming (pre-folding) and second forming (before connecting a current collector plate, compacting a substrate in advance to fold the substrate). In an embodiment, for example, when the forming position A is a position spaced 3 mm apart from an end of the substrate tab, the cutting depth L2 may be in a range of 3 mm to 4.5 mm. As another example, when the forming position A is a position spaced 5 mm apart from the end of the substrate tab, the cutting depth L2 may be in a range of 5 mm to 7.5 mm. That is, the cutting depth L2 may be selected within a range of 100% to 150% as compared with the forming position A.

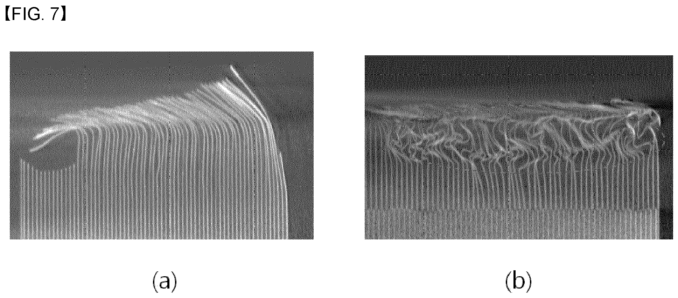

As described above, the cutting width L1 of the first substrate tab 212a and the second substrate tab 222a being increased from the front end to the finish end is for considering an overlapping amount between the substrate tabs when the electrode assembly 200 is wound. Referring to FIG. 4, a radius of the electrode assembly 200 increases from the front end to the finish end. Therefore, it can be seen (see FIG. 5) that a region B of a portion indicated by a triangle has a narrow width and a width gradually increases toward a region C thereof. When it is assumed that a region indicated by the triangle corresponds to the cutting width L1, a shape in which a width of the substrate tab increases as a number of winding turns increases corresponds to a shape in which a radius increases. However, when the substrate tab is cut to a same width as in the related art during forming of the substrate tab, an overlapping area between the substrate tabs in the region B is greater than that in the region C. When the overlapping area between the substrate tabs is increased, during compaction for folding, the substrate tabs are not folded in a desired direction due to contact between the substrate tabs, but are crushed or pressed (see FIG. 7B). Accordingly, the substrate may be damaged due to contact and friction between the substrate tabs. Therefore, in an embodiment of the present disclosure, the uncoated portion is cut such that the cutting width L1 of the substrate tab is gradually increased from the front end to the finish end of the electrode plate.

In the above-described embodiment, when the substrate tab is formed, the substrate tab is cut in such a way that an end of the uncoated portion is perpendicular to a cutting direction. However, the cutting direction may correspond to an oblique line.

FIG. 6 is a plan view illustrating a state in which an uncoated portion of an electrode plate is cut according to another embodiment of the present disclosure.

As shown in FIG. 6, when a first uncoated portion 212 and a second uncoated portion 222 of a first electrode plate 210 and a second electrode plate 220 are cut, a cutting width L1 may be gradually increased as in the embodiment of FIG. 4. In this case, a cutting depth L2 is also the same as that in the embodiment of FIG. 4, and a cutting direction may form an oblique line to an end of the uncoated portion. In an embodiment, in FIG. 6, cutting may be performed such that the end of the uncoated portion and the cutting direction form an acute angle. The cutting is performed in consideration of a winding direction of an electrode assembly 200 and a folding direction of a substrate. When the uncoated portion is cut, a pointed portion is directed toward a finish end when the electrode assembly 200 is wound, thereby preventing or substantially preventing damage to the uncoated portion or a separator due to a cut end during a compaction process. Therefore, in an embodiment, an oblique cutting direction of the uncoated portion is inclined toward the finish end based on a front end of an electrode plate as shown in FIG. 6, which is a plan view illustrating a state in which an uncoated portion of an electrode plate is cut according to another embodiment of the present disclosure.

FIGS. 7A and 7B show a comparison between states after forming of an electrode assembly to which cutting of an uncoated region is applied according to an embodiment of the present disclosure and a general electrode assembly, respectively. Here, FIG. 7A shows a state in which the electrode assembly, to which the method of cutting the uncoated portion of the present disclosure is applied, is wound and then subjected to a compaction process. FIG. 7B shows a state in which a general, or conventional, electrode assembly is wound and then subjected to a compaction process. In the general electrode assembly, uncoated portions are cut at equal intervals, and a cutting depth is also arbitrarily set. Therefore, when substrate tabs are compacted or pressed with a current collector plate to connect the current collector plate, the substrate tabs are irregularly bent as shown in FIG. 7B, and damage may occur due to contact between the substrate tabs. In addition, the substrate tabs are irregularly bent, which degrades weldability with the current collector plate and causes poor electrical connection. However, when the method of cutting the uncoated portion (substrate) of the present disclosure is applied, an overlapping amount between the substrate tabs can be minimized or reduced during winding of the electrode assembly. In addition, since the substrate tab is cut in consideration of pre-folding and a compaction position of the substrate tab, it is easy to form the substrate tab in a certain direction during forming of the substrate tab. Accordingly, damage to the substrate tab may be prevented or substantially prevented.

According to embodiments of the present disclosure, when a non-coated portion for forming a substrate tab is cut, a cutting width is changed to be increased toward a winding end, thereby minimizing or reducing an overlapping amount between substrates during winding. Accordingly, damage to the substrate during pre-folding or compaction of the substrate may be prevented or substantially prevented.

While some embodiments for carrying out the present disclosure have been described herein, the present disclosure is not limited to these embodiments, and it will be understood by a person skilled in the art that various changes in form and details may be made therein without departing from the scope of the present disclosure as set forth by the following claims.

## Claims

1. A secondary battery comprising:
an electrode assembly which is wound and comprises a first electrode plate comprising a first uncoated portion, a second electrode plate comprising a second uncoated portion, and a separator between the first electrode plate and the second electrode plate;
a case having a cylindrical shape and accommodating the electrode assembly; and
a cap assembly sealing the case,
wherein a cutting depth before winding of each of the first uncoated portion and the second uncoated portion is in a range of 100% to 150% as compared with a forming position.

2. The secondary battery as claimed in claim 1, wherein the cutting depth is a cutting length in a direction from an end of each of the first and second uncoated portions toward an active material coating region, optionally wherein the forming position is a position at which the first uncoated portion and the second uncoated portion are folded when compacted.

3. The secondary battery as claimed in claim 2, wherein a cutting direction of the first uncoated portion and the second uncoated portion is perpendicular to the end of each of the first uncoated portion and the second uncoated portion.

4. The secondary battery as claimed in claim 3, wherein, when the first uncoated portion and the second uncoated portion are cut, a cutting width gradually increases toward a winding end, optionally wherein, in the first uncoated portion and the second uncoated portion, when the electrode assembly is wound, a portion of a region adjacent to a winding start portion and a portion of a region adjacent to an outermost winding portion are cut.

5. The secondary battery as claimed in claim 4, wherein
the case comprises an upper surface portion having a circular shape and a side portion extending downward from the upper surface portion and comprising an open lower end portion, and
the cap assembly is coupled to the lower end portion of the side portion and insulated from the side portion.

6. The secondary battery as claimed in claim 5, further comprising a rivet terminal electrically connected to the first electrode plate and insulated from the upper surface portion and coupled to the upper surface portion.

7. The secondary battery as claimed in claim 6, wherein
the side portion is electrically connected to the second electrode plate,
the first electrode plate is a positive electrode, and
the second electrode plate is a negative electrode.

8. The secondary battery as claimed in claim 7, further comprising a first electrode current collector plate between the first electrode plate and the rivet terminal, and comprising a terminal connection portion electrically connected to the rivet terminal and an electrode plate connection portion electrically connected to the first electrode plate.

9. The secondary battery as claimed in claim 8, wherein
the electrode plate connection portion has a disk shape, and
the terminal connection portion is arranged on the electrode plate connection portion and separated from the electrode plate connection portion by a slot formed to pass through the electrode plate connection portion.

10. The secondary battery as claimed in claim 9, wherein the first electrode current collector plate further comprises a fuse portion connecting the terminal connection portion and the electrode plate connection portion.

11. The secondary battery as claimed in claim 10, wherein the electrode plate connection portion is welded in a state in which a lower surface thereof is in contact with an upper surface of the first uncoated portion folded when the first uncoated portion is compacted.

12. The secondary battery as claimed in claim 11, wherein:
(i) a welding direction between the electrode plate connection portion and the first uncoated portion is a radial direction; and/or
(ii) a welding direction between the plate surface portion and the second uncoated portion is a radial direction.

13. The secondary battery as claimed in any one of claims 7 to 12, further comprising a second electrode current collector plate comprising a plate surface portion which has a disk shape and is electrically connected to the second electrode plate and at least one extension portion which extends from the plate surface portion in a direction and is electrically connected to the side portion of the case.

14. The secondary battery as claimed in claim 13, wherein:
(i) the extension portion is insulated from the cap assembly; and/or
(ii) a beading part is formed at the side portion of the case to be concave toward the electrode assembly, and
a gasket made of an insulating material is arranged between the cap assembly and the side portion of the case, optionally wherein the extension portion is electrically connected to the beading part.

15. The secondary battery as claimed in claim 2, wherein a cutting direction of the first uncoated portion and the second uncoated portion forms an oblique line to the end of each of the first uncoated portion and the second uncoated portion, optionally wherein, when the electrode assembly is wound, the end of each of the first uncoated portion and the second uncoated portion forms an acute angle with the cutting direction based on a direction toward an outermost winding side.
